(19) Europäisches Patentamt
European Patent Office
Office européen des brevets

(11) EP 1 115 071 A1

(12) EUROPEAN PATENT APPLICATION

(43) Date of publication:
11.07.2001 Bulletin 2001/28

(51) Int Cl.$^7$: G06F 17/30

(21) Application number: 00300007.2

(22) Date of filing: 05.01.2000

(84) Designated Contracting States:
AT BE CH CY DE DK ES FI FR GB GR IE IT LI LU MC NL PT SE
Designated Extension States:
AL LT LV MK RO SI

(71) Applicant: Gavoa Ltd
London W140QH (GB)

(72) Inventor: Chapus, Stephane
London SW5 9SL (GB)

(74) Representative: Geary, Stuart Lloyd et al
Venner, Shipley & Co.,
20 Little Britain
London EC1A 7DH (GB)

# (54) Delivery of self-customising content

(57) Self-customising content is delivered to users of an information distribution system such as the World Wide Web (3). A content definition entity (6; 106; 206) contains source content data (33 - 40; 132 - 139; 232 - 239), e.g. image or sound data, and control data or instructions (16, 25; 116, 124; 216, 224) defining the selection or modification of the the source content data in the light of local circumstances, e.g. type of web browser, user name, age or sex, or time of day, to produce object content data which is actually presented to the user. The selection or modification is performed at the user's client station (1).

A web-based development tool for content definition entities (6; 106; 206) allows a user to create a content definition entity (6; 106; 206) at a server site (100) using a web browser and then download the completed entity.



Printed by Jouve, 75001 PARIS (FR)

## Description

The present invention relates to the delivery of self-customising content to users of an information distribution system.

The means for distributing information and entertainment electronically are becoming a ubiquitous aspect of modern life. Television first became available in the 1930s and, in recent years, the influence of the World Wide Web has grown exponentially. Indeed, the World Wide Web is on the verge of reaching seamlessly into mobile phones with the advent of WAP (Wireless Application Protocol) services and high bandwidth data channels in mobile phone networks.

Television and the World Wide Web are generally blind to the user or the user's circumstances. That is, the content presented to a user is independent of the identity of the user or the user's circumstances, such as the hardware and software being used or the time of day. It has, however, become apparent that customisation of the content presented to a user would be desirable.

In the present specifications, the term "content" includes graphical and text images, both moving and still, and audio matter or other matter intended to be perceived by a user.

According to the present invention, there is provided a method of presenting content comprising: -

receiving a content definition entity including a content source data element and control data;
processing said content source data in dependence on circumstance data and said control data to produce content object data; and
presenting said content object data to a user in perceivable form.

The term "circumstance data" data means data relating to the circumstances of the presentation of the content, including personal details of the user, details of the software and hardware environments used and details of the physical environment, e.g. date, time, geographical location and temperature.

The use of a content definition entity in this way means that the designer of a web page or a television or radio broadcast can provide content that presents a different experience for different users without the need for a private channel between the content provider's system and the user's system. Furthermore, the customisation of the content does not require transmission of personal details from a user, thereby avoiding problems with the rights of individuals to privacy.

The entity may be a computer file, in which case the method preferably includes installing a program on a computer apparatus, the program being configured to cause said computer apparatus to process said content source data to produce said content object data in dependence on said control data and said circumstance data. However, the entity could be a software component object which includes both the content source data and the program code for processing the content source data into content object data.

An example of processing of the content source data into content object data is combining the content source data element with other data, e.g. circumstance data, in dependence on said control data. Another example of processing content source data into content object data comprises selecting a particular item of content source data from a plurality of content source data items.

Conveniently, said entity defines a time-varying banner for a web page.

Preferably, said processing has two stages and comprises (a) selecting a plurality of content source data elements from a set of content source data elements in said entity in dependence on circumstance data and said control data and (b) inserting a circumstance data value representation into at least one of said selected plurality of content source data elements. Thereafter, the selected, and possibly modified, plurality of content source data elements are combined to produce a content object data element. However, additional content processing steps may be included.

According to the present invention, there is provided an apparatus for performing a method according to the present invention, the apparatus comprising a receiving means for receiving a content definition entity from a transmission channel, means for providing circumstance data, output means and processing means, wherein the processing means is configured to processing said content source data in dependence on circumstance data and said control data to produce content object data and output said content object data to a user in perceivable form via the output means.

According to the present invention, there is provided a technical manifestation of a content definition entity for use in a method according to the present invention, said entity including a content source data element and control data for controlling the processing of said content source data in dependence on circumstance data.

The technical manifestation may take the form of a magnetic field pattern, features on an optically readable data carrier, an array of electronic memory cells or a signal modulated with a digital representation of the contents of said entity. If the entity is manifested as a signal, the signal may comprise a plurality of packets.

According to the present invention, there is provided a method of providing a technical manifestation according to the present invention, the method comprising:-

transferring a content source data element from a client to a server;
generating, at the server, one or more forms for display on a browser at the client in response to a user request from the client;
receiving operation definition data, entered into said form or forms;
generating a content definition entity including said content source data element and control data, derived from said operation definition data; and
sending said entity to the client from the server.

Preferably, this method includes running an applet for providing a graphical interface for setting a position for variable data with the content source data element, wherein said position is included in the operation definition data.
Advantageously, this method includes receiving financial transaction data from the client before sending said entity to the client from the server.
According to the present invention, there is provided a method of providing a technical manifestation of software, the method comprising:-

generating, at a web server, a form for display on a browser at the client in response to a user request from the client;
receiving user inputs, entered into said form;
creating a software item in dependence on said user inputs;
receiving financial transaction data from the client; and
sending said item to the client from the server after receiving said fmancial transaction data. In this context, "software" is not restricted in meaning to computer programs but includes within its scope audio and still and moving images.

Thus, the present invention provides a web-based integrated development environment that enables a service provider to charge users on the basis of completed projects rather than by charging for a copy of the development software.
An embodiment of the present invention will now be described, by way of example, with reference to the accompanying drawings, in which: -

Figure 1 shows a client and a server connected via the Internet;
Figure 2 is a data flow diagram illustrating the operation of a client embodying the present invention;
Figure 3 is a diagram illustrating a first content definition entity;
Figure 4 is a flowchart illustrating the processing of the content definition entity of Figure 3;
Figure 5 is a data flow diagram illustrating the operation of a content definition entity development system according to the present invention;
Figure 6 is a flowchart illustrating the stages in the creation of a content definition entity using the system of Figure 4;
Figure 7 is a diagram illustrating a second content definition entity;
Figure 8 is a flowchart illustrating the processing of the content definition entity of Figure 7;
Figure 9 is a diagram illustrating a third content definition entity; and
Figure 10 is a flowchart illustrating the processing of the content definition entity of Figure 9.

Referring to Figure 1, a client 1 can access pages provided by a web server 2 via the Internet 3.
Referring to Figure 2, the client 1 supports a web browser 4 which can receive HTML documents 5 from the server 2 (see Figure 1) via the Internet 3. In the present example, the browser 4 has retrieved a document 5 which includes the following:

<EMBED SRC = [content definition entity URL] /EMBED>

where the content definition entity URL includes a filename having, in this example, the suffix ".ccf".
The browser 4 responds to this by retrieving the identified content definition entity 6 from the specified location and stores it locally. The browser 4 parses the filename of the embedded item and responds to the ".ccf" suffix by loading a "plug-in" module 7 for processing content definition entities 6. In this example, the content definition entity 6 defines a self-customising animated banner and the module 7 generates a ".gif" image from the contents of the content definition entity 6. This "gif' image is then displayed to the user 8 in the web page at the position indicated by the < EMBED... > tag. Since the banner is animated, it passes through a sequence of images or "phases" when displayed in a web page.

Referring to Figure 3, the content definition entity 6 has a header 11 containing miscellaneous record data including an indication of the type of content in the content definition entity. Following the header, come values for the number of phases 12 that the banner passes through, the number of images 13 in the entity 6, the number of control parameters used 14 and a unique ID 15.

A level 1 control section 16 has a subsection 17, 18 for each of the banner's phases. These subsections 17, 18 specify the control logic for the selection of the images to be used for the respective phases. For each control parameter, each subsection 17,18 has a parameter name entry 19, a parameter default value 20, a condition (e.g. no comparison, " = ", " > ", "<" etc.) 21, a reference value 22, a default image ID 23 and an alternative image ID 24.

A level 2 control section 25 has a subsection 26, 27 for each of the banner's phases. These subsections 26, 27 specify the control logic for the insertion of text into the image selected for the respective phase. Each subsection 26,27 has a flag 28 indicating whether text is to be added to the selected image, X and Y co-ordinates 29, 30 specifying the position of text to be added, a font definition 31, including font name, colour, size, whether bold, italic or underlined, and a parameter name 32 identifying the text to be inserted.

Finally, the entity 6 has a plurality of images 33, ..., 40. It is there images which are identified by the image IDs mentioned above.

The processing of the content definition entity 6 by the module 7 will now be described.

Referring to Figure 4, the module 7 reads the number of phases 12, the number of images 13 and the number of parameters 14 from the entity 6 (steps s1, s2 and s3).

For each phase and for each parameter or until an alternative image is selected, (steps s10-s13), the module 7 determines whether a value is available for the current parameter (step s4) and, if not, sets the parameter's value to the default value (step s5). If, on the other hand, a value is available, the parameter's value is set to this value (step s6). Then, the module 7 determines whether the value of the parameter meets the specified condition (step s7). If the condition is not met, the default image is identified as the selected image (step s8), otherwise the alternative image is selected (step s9) and the loop for the present phase is exited.

The parameters may comprise user details, such as name, age and sex, stored locally, the type of browser or operating system being used, and environmental factors such as the current time or date. Thus, for example, a control parameter entry in a level 1 subsection 17, 18 could comprise:

age:25:>:30:image1_id:image2_id

and the module 7 would process it as follows. First the module 7 would try to read the user's age from a local store of personal information (steps s4) and if it could not would set the value of the age parameter to 25, the default value (step s5). However, if an age value is found, the module 7 sets the parameter value to this (step s6). When the parameter value has been set, the module 7 determines which comparison type to employ, in this case "is greater than", and performs the appropriate comparison between the parameter value and the reference value, i.e. 30 (step s7). If the result of the comparison is false, the default image id, image1_id, is selected (step s9) and, if the result of the comparison is true, the alternative image id, image2_id, is selected (step s8).

When the level 1 processing has been completed, the module 7 proceeds with the level 2 processing. The level 2 processing is concerned with modifying the images selected for the banner in the level 1 processing.

In level 2, for each phase (steps s16 and s17), the module determines whether the flag is set (step s14). If the flag is not set, the module does not process the image for the current phase (step s16). However, if the flag is set, the module 7 inserts as text the value of the specified parameter at the position indicated by the co-ordinates using the specified font into the image selected in level 1 for the current phase (step s15). For instance, if the parameter in question is the user's name, the text "John Smith" would be inserted in the case where the user's name is John Smith.

When the level 2 processing is complete, the module combines the selected, and optionally modified, images into an animated "gif" file which is stored in a temporary location and returns a link to the "gif" file to the browser which then inserts the animated gif image into the web page requested by the user (step s18).

A development system for content definition entities will now be described.

Referring to Figure 5, a server system 100 is connected to the Internet 3. The server system 100 supports a web server process 101 and an ftp server process 102. A plurality of CGI processes 103 respond to action URLs submitted by a user of a web browser at a client location.

Referring to Figure 6, when a user wishes to create a content definition entity, the user submits the URL of a login page for the server system 100 using a web browser. The web server process 101 sends a login page to the web browser which displays it (step s20). The login page is conventional and includes a form so that the user can enter an ID and a password. Assuming that the ID and password are correct, the web server process 101 sends a page containing a JavaScript program that enables the user to identify the image files to be used for the banner and then opens an FTP session with the FTP server process 102 (step s21), uploads the identified image files to a directory 104 (Figure 5) allocated to the user (step s22) and then closes the FTP session (step s23). The last action of the JavaScript program is to request a level 1 setup page from the web server process 101.

The level 1 setup page is returned by the web server process 101 (step s24) and comprises a form which has controls enabling a user to specify the data for the level 1 subsections for a phase of the banner. Where appropriate, e.g. the parameter names, the conditions and the image filenames, the user is presented in drop-down lists from which items can be selected by the user.

When the data for the present phase has be entered, the user clicks on a next phase button. This causes an action URL to be submitted to the web server process 101. The parameters of the URL are the data items entered by the user. The action URL is processed by a first CGI process which stores the entered data and causes, in this case (step s25), the level 1 setup page to be sent to the user again.

When the user has entered the data for the last phase, the user will again be presented with the level 1 setup page (step s24). However, if the user clicks on the "nest" button, the first CGI process determines that the parameter data is null (step s25) and causes a level 2 setup page to be sent to the user (step s26). The first CGI process generates the level 2 setup page dynamically so that it contains a row for each phase set up using the level 1 setup page.

The level 2 setup page, enables a user to specify whether level 2 processing it to be applied to each phase and the font to be used. Additionally, the page includes a JavaScript program that can display the banner images, which it retrieves from their locations on the user's computer, and allows the user to select the parameter to be added to the image as text and specify graphically the position of the text.

When the user has specified the level 2 processing, the user clicks on a "next" button. This causes an action URL to be submitted to the web server process 101. The parameters of the action URL comprise the data entered by the user using the level 2 setup page.

The action URL from the level 2 setup page is processed by a second CGI process. The second CGI process stores the level 2 data and causes a payment page to be sent to the user (step s27). This page comprises a form which can accept the user's credit or debit card details. Such forms are well-known in the art.

Assuming that user wishes to retrieve the content definition entity, the user completes the payment form and clicks on a submit button. The user's credit or debit card details are then submitted in an action URL to the web server process 101 and are processed by a third CGI process which performs the conventional financial transaction process, builds the content definition entity from the data supplied by the user and causes a download page to be sent to the user (step s28).

The download page invites the user to download the built content definition entity in a conventional manner (step s29).

Referring to Figure 7, a content definition entity 106 has a header 111 containing miscellaneous record data including an indication of the type of content in the content definition entity. Following the header, come values for the number of phases 112 that the banner passes through, the number of images 113 in the entity 106, the number of control parameters used 114 and a unique ID 115.

A level 1 control section 116 has a subsection 117, 118 for each of the banner's phases. These subsections 117, 118 specify the control logic for the selection of the images to be used for the respective phases. For each control parameter, each subsection 117, 118 has a parameter name entry 119, a parameter default value 120, a condition (e.g. no comparison, "=", ">", "<" etc.) 121 and a reference value 122. In addition, the level 1 control section has an image table subsection 123 which maps the results of the comparisons defined by the other subsections 116, 117 onto the images available for display. For instance, if comparisons involving four parameters are used for selecting the image for one phase, the results of the comparisons are represented by a four bit binary number, 0000, 0001, 0010 etc. The image table for the phase in question then comprises an image ID, which need not be unique, for each four bit number, thus: -

| Comparison Result | Image ID |
|---|---|
| 0000 | 2 |
| 0001 | 3 |
| ... | ... |
| 1111 | 1 |

A level 2 control section 124 has a subsection 125, 126 for each of the banner's phases. These subsections 125, 126 specify the control logic for the insertion of text into the image selected for the respective phase. Each subsection 125, 126 has a flag 127 indicating whether text is to be added to the selected image, X and Y co-ordinates 128, 129 specifying the position of text to be added, a font definition 130, including font name, colour, size, whether bold, italic or underlined, and a parameter name 131 identifying the text to be inserted.

Finally, the entity 106 has a plurality of images 132, ..., 139. It is there images which are identified by the image IDs mentioned above.

The processing of the content definition entity 106 by a module 7 will now be described.

Referring to Figure 8, the module 7 reads the number of phases 112, the number of images 113 and the number of parameters 114 from the entity 6 (steps s101, s102 and s103).

For each parameter of each phase (steps s108-s111), the module 7 determines whether a value is available for the current parameter (step s104) and, if not, sets the parameter's value to the default value (step s105). If, on the other hand, a value is available, the parameter's value is set to this value (step s106). Then, the module 7 determines whether the value of the parameter meets the specified condition (step s107) and stores the result as a digit of n-bit binary number for indexing the image table for the current phase.

As in the first example, given above, the parameters may comprise user details, such as name, age and sex, stored locally, the type of browser or operating system being used, and environmental factors such as the current time or date. Thus, for example, a control parameter entry in a level 1 subsection 117, 118 could comprise:

age:25:>:30

and the module 7 would process it as follows. First the module 7 would try to read the user's age from a local store of personal information (steps s104) and, if it could not, would set the value of the age parameter to 25, the default value (step s105). However, if an age value is found, the module 7 sets the parameter value to this (step s106). When the parameter value has been set, the module 7 determines which comparison type to employ, in this case "is greater than", and performs the appropriate comparison between the parameter value and the reference value, i.e. 30 (step s107). If the result of the comparison is false, a 0 is added in the next unfilled column of the n-bit binary number for indexing the image table for the current phase. Similarly, If the result of the comparison is true, a 1 is added in the next unfilled column of the n-bit binary number for indexing the image table for the current phase.

When the level 1 processing has been completed, the module proceeds with the level 2 processing. The level 2 processing is concerned with modifying the images selected for the banner in the level 1 processing.

In level 2, for each phase (steps s115 and s116), the module determines whether the flag is set (step s112). If the flag is not set, the module 7 does not process the image for the current phase. However, if the flag is set, the module 7 gets the image for the current phase using the image table for the current phase (step s113) and then inserts as text the value of the specified parameter at the position indicated by the co-ordinates, using the specified font, into the image selected in level 1 for the current phase (step s114).

When the level 2 processing is complete (step s115), the module 7 combines the selected, and optionally modified, images into an animated "gif" file which is stored in a temporary location and returns a link to the "gif" file to the browser which then inserts the animated gif image into the web page requested by the user (step s117).

Referring to Figure 9, an audio content definition entity 206 has a header 211 containing miscellaneous record data including an indication of the type of content in the content definition entity. Following the header, come values for the number of audio clips 213 in the entity 206, the number of control parameters used 214 and a unique ID 215.

A level 1 control section 216 specifies the control logic for the selection of the audio clip to be played. For each control parameter, the level 1 control section 216 has a parameter name entry 219, a parameter default value 220, a condition (e.g. no comparison, " = ", " > ", "<" etc.) 221 and a reference value 222. In addition, the level 1 control section has an audio table subsection 223 which maps the results of the comparisons defined for the parameters onto the audio clips available for playing. For instance, if comparisons involving four parameters are used for selecting the audio clip, the results of the comparisons are represented by a four bit binary number, 0000, 0001, 0010 etc. The image table 223 then comprises an audio clip ID, which need not be unique, for each four bit number, thus: -

| Comparison Result | Audio Clip ID |
|---|---|
| 0000 | 5 |
| 0001 | 1 |
| ... | ... |
| 1111 | 2 |

A level 2 control section 224 specifies the control logic for the insertion of a short speech element into the selected audio clip. A flag 227 indicates whether speech is to be added to the selected audio clip, a position value 228 specifies the position at which the speech is to be inserted in terms of samples and a parameter name 229 identifying the parameter value to be inserted as speech.

Finally, the entity 206 has a plurality of audio clips 232, ..., 239. It is these audio clips which are identified by the audio clip IDs mentioned above.

The processing of the content definition entity 206 by a module 7 will now be described.

Referring to Figure 10, the module 7 reads the number of audio clips 213 and the number of parameters 214 from the entity 206 (steps s201 and s202).

For each parameter of each phase (steps s207 and s208), the module 7 determines whether a value is available for the current parameter (step s203) and, if not, sets the parameter's value to the default value (step s204). If, on the other hand, a value is available, the parameter's value is set to this value (step s205). Then, the module 7 determines whether the value of the parameter meets the specified condition (step s206) and stores the result as a digit of n-bit binary number for indexing the audio table.

As in the first example, given above, the parameters may comprise user details, such as name, age and sex, stored locally, the type of browser or operating system being used, and environmental factors such as the current time or date. Thus, for example, a control parameter entry in the level 1 control section 216 could comprise:

age:25:>:30

and the module 7 would process it as follows. First the module 7 would try to read the user's age from a local store of personal information (steps s203) and, if it could not, would set the value of the age parameter to 25, the default value (step s204). However, if an age value is found, the module 7 sets the parameter value to this (step s205). When the parameter value has been set, the module 7 determines which comparison type to employ, in this case "is greater than", and performs the appropriate comparison between the parameter value and the reference value, i.e. 30 (step s206). If the result of the comparison is false, a 0 is added in the next unfilled column of the n-bit binary number for indexing the image table for the current phase. Similarly, if the result of the comparison is true, a 1 is added in the next unfilled column of the n-bit binary number for indexing the image table for the current phase.

When the level 1 processing has been completed, the module proceeds with the level 2 processing. The level 2 processing is concerned with modifying the selected audio clip so that it includes a small speech element.

In level 2, the module determines whether the flag is set (step s209). If the flag is not set, the module 7 does not process the selected audio clip. However, if the flag is set, the module 7 gets the selected audio clip using the audio table (step s209). A text to speech routine of the module 7 then converts the value of the identified parameter into a digital speech signal and splices it into the selected audio clip at the specified position (step s210).

The modified audio clip is returned to the browser as an audio file that is played in a conventional manner.

The present invention has been illustrated in the context of the World Wide Web. However, it will be appreciated that a content control entity could be embedded in a television signal. For instance, subtitles could be provided in several languages in a content definition entity and the appropriate language subtitles selected for display on the basis of information stored in a television receiver. Alternatively, soundtrack elements of a children's programme could be customised so as to address the child watching the programme by name.

## Claims

1. A method of presenting content comprising: -

   receiving a content definition entity including a content source data element and control data;
   processing said content source data in dependence on circumstance data and said control data to produce content object data; and
   presenting said content object data to a user in perceivable form.

2. A method according to claim 1, wherein said entity is a computer file.

3. A method according to claim 2, including installing a program on a computer apparatus, the program being configured to cause said computer apparatus to process said content source data to produce said content object data in dependence on said control data and said circumstance data.

4. A method according to claim 1, 2 or 3, including combining the content source data element with other data in dependence on said control data.

5. A method according to claim 4, wherein said other data is an item of circumstance data.

6. A method according to any preceding claim, wherein said entity includes a plurality of content source data elements and the control data includes instructions for causing an element to be selected from said elements.

7. A method according to any preceding claim, wherein said entity defines a time-varying banner for a web page.

**8.** A method according to any preceding claim, wherein the circumstance data comprises personal data relating to a user.

**9.** A method according to any preceding claim, wherein the circumstance data comprises environmental data relating to a user.

**10.** A method according to any preceding claim, wherein said processing comprises selecting a plurality of content source data elements from a set of content source data elements in said entity in dependence on circumstance data and said control data, inserting a circumstance data value representation into at least one of said selected plurality of content source data elements, and thereafter combining the selected plurality of content source data elements to produce a content object data element.

**11.** An apparatus for performing a method according to any preceding claim, the apparatus comprising a receiving means for receiving a content definition entity from a transmission channel, means for providing circumstance data, output means and processing means, wherein the processing means is configured to processing said content source data in dependence on circumstance data and said control data to produce content object data and output said content object data to a user in perceivable form via the output means.

**12.** A technical manifestation of content definition entity for use in a method according to any one of claims 1 to 10, said entity including a content source data element and control data for controlling the processing of said content source data in dependence on circumstance data.

**13.** A technical manifestation according to claim 12, comprising a magnetic field pattern.

**14.** A technical manifestation according to claim 12, comprising features on an optically readable data carrier.

**15.** A technical manifestation according to claim 12, comprising an array of electronic memory cells.

**16.** A technical manifestation according to claim 12, comprising a signal modulated with a digital representation of the contents of said entity.

**17.** A technical manifestation according to claim 16, wherein said signal comprises a plurality of packets.

**18.** A method of providing a technical manifestation according to any one of claims 12 to 17, the method comprising:-

transferring a content source data element from a client to a server;
generating, at the server, a form for display on a browser at the client in response to a user request from the client;
receiving operation definition data, entered into said form;
generating a content definition entity including said content source data element and control data, derived from said operation definition data; and
sending said entity to the client from the server.

**19.** A method according to claim 18, wherein a plurality of forms are generated for the input of said operation definition data.

**20.** A method according to claim 18 or 19, including running an applet for providing a graphical interface for setting a position for variable data with the content source data element, wherein said position is included in the operation definition data.

**21.** A method according to claim 18, 19 or 20, including receiving financial transaction data from the client before sending said entity to the client from the server.

**22.** A method of providing a technical manifestation of software, the method comprising:-

generating, at a web server, a form for display on a browser at the client in response to a user request from the client;
receiving user inputs, entered into said form;

creating a software item in dependence on said user inputs;
receiving financial transaction data from the client; and
sending said item to the client from the server after receiving said financial transaction data.

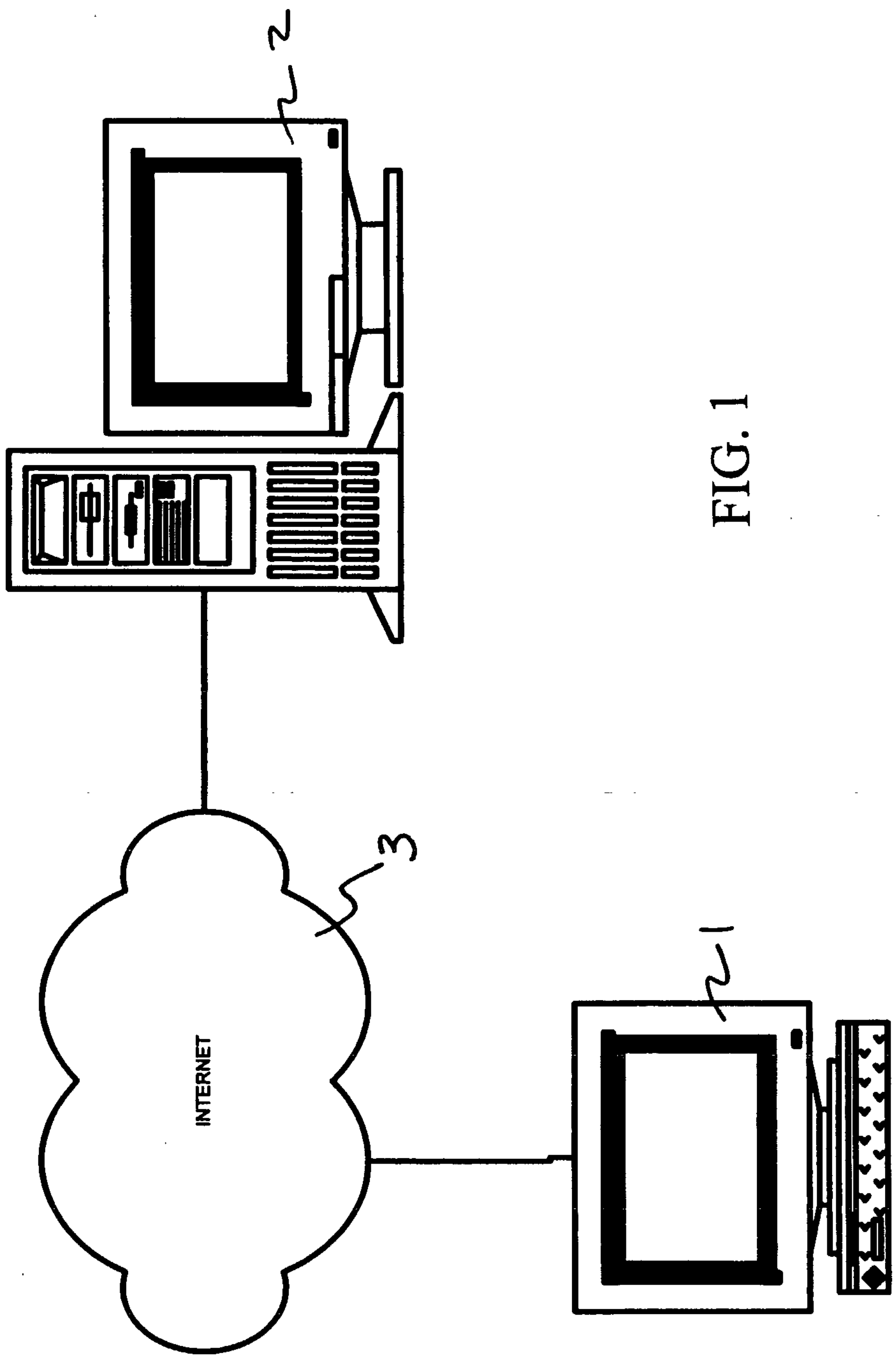


FIG. 1

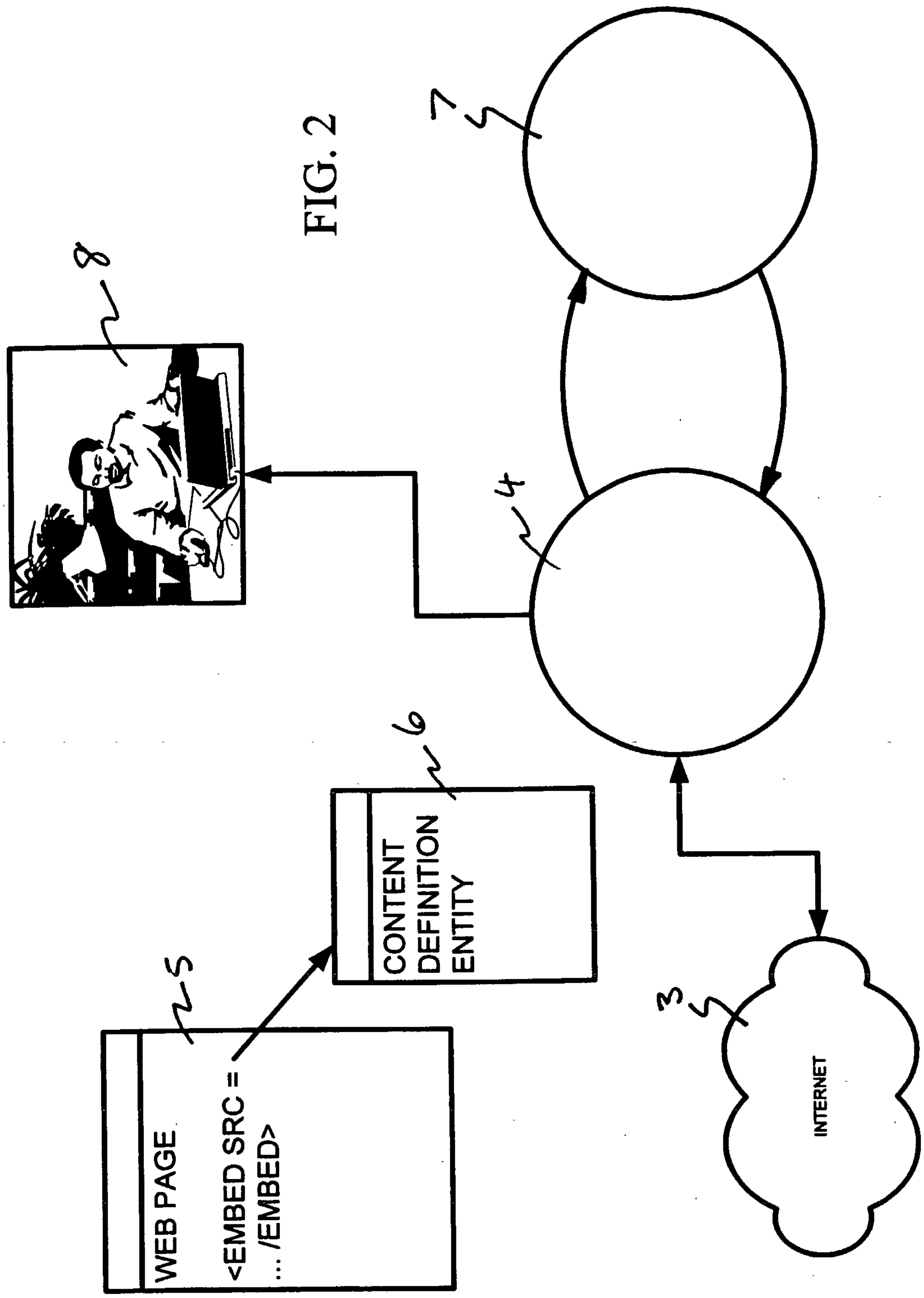
8
7
4
WEB PAGE
<EMBED SRC =
... /EMBED>
5
CONTENT
DEFINITION
ENTITY
6
3
INTERNET

FIG. 2

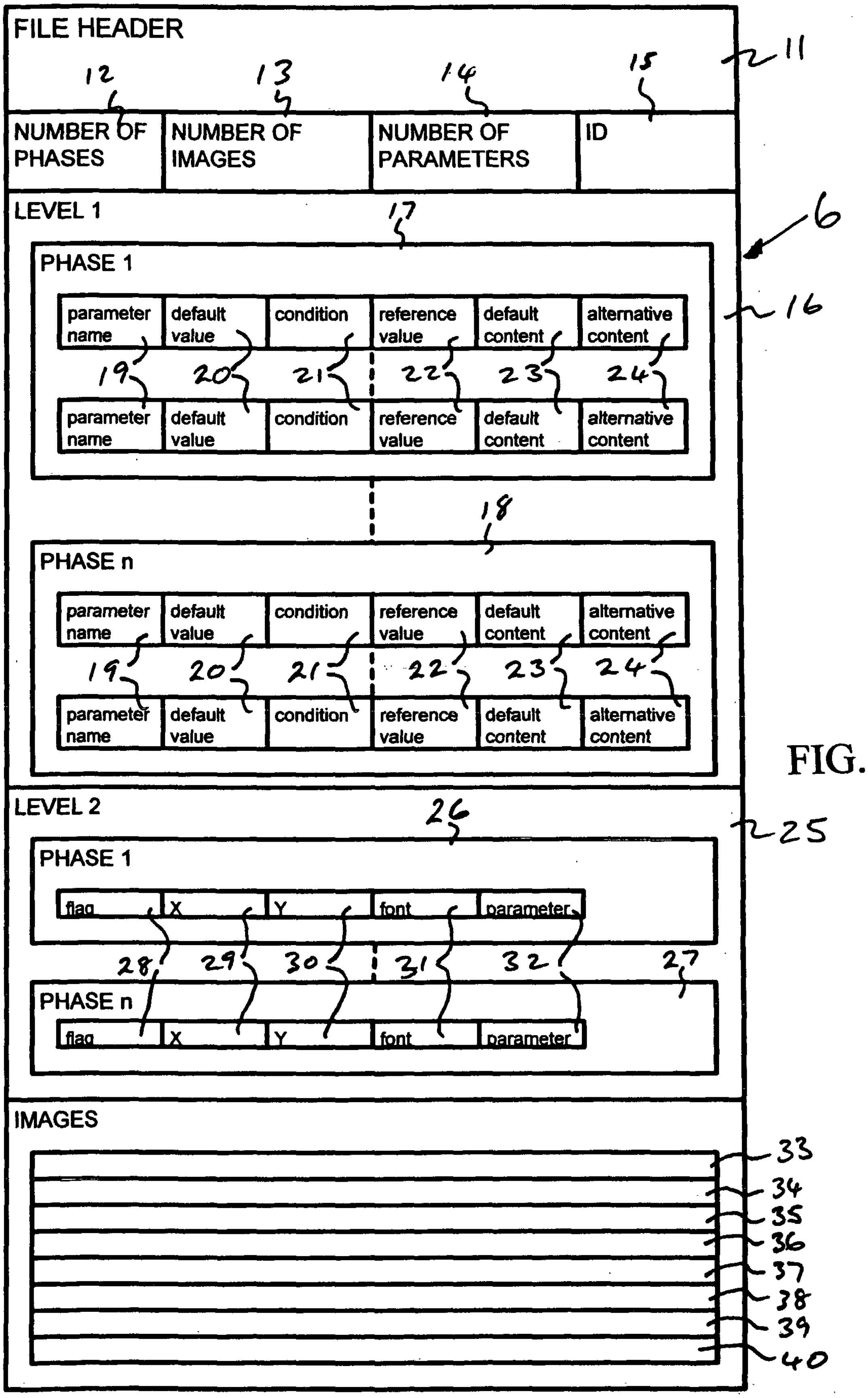
FILE HEADER
12
13
14
15
11
NUMBER OF PHASES
NUMBER OF IMAGES
NUMBER OF PARAMETERS
ID
LEVEL 1
17
6
PHASE 1
16
parameter name
default value
condition
reference value
default content
alternative content
19
20
21
22
23
24
18
PHASE n
LEVEL 2
26
25
PHASE 1
flag
X
Y
font
parameter
28
29
30
31
32
27
PHASE n
IMAGES
33
34
35
36
37
38
39
40

FIG. 3

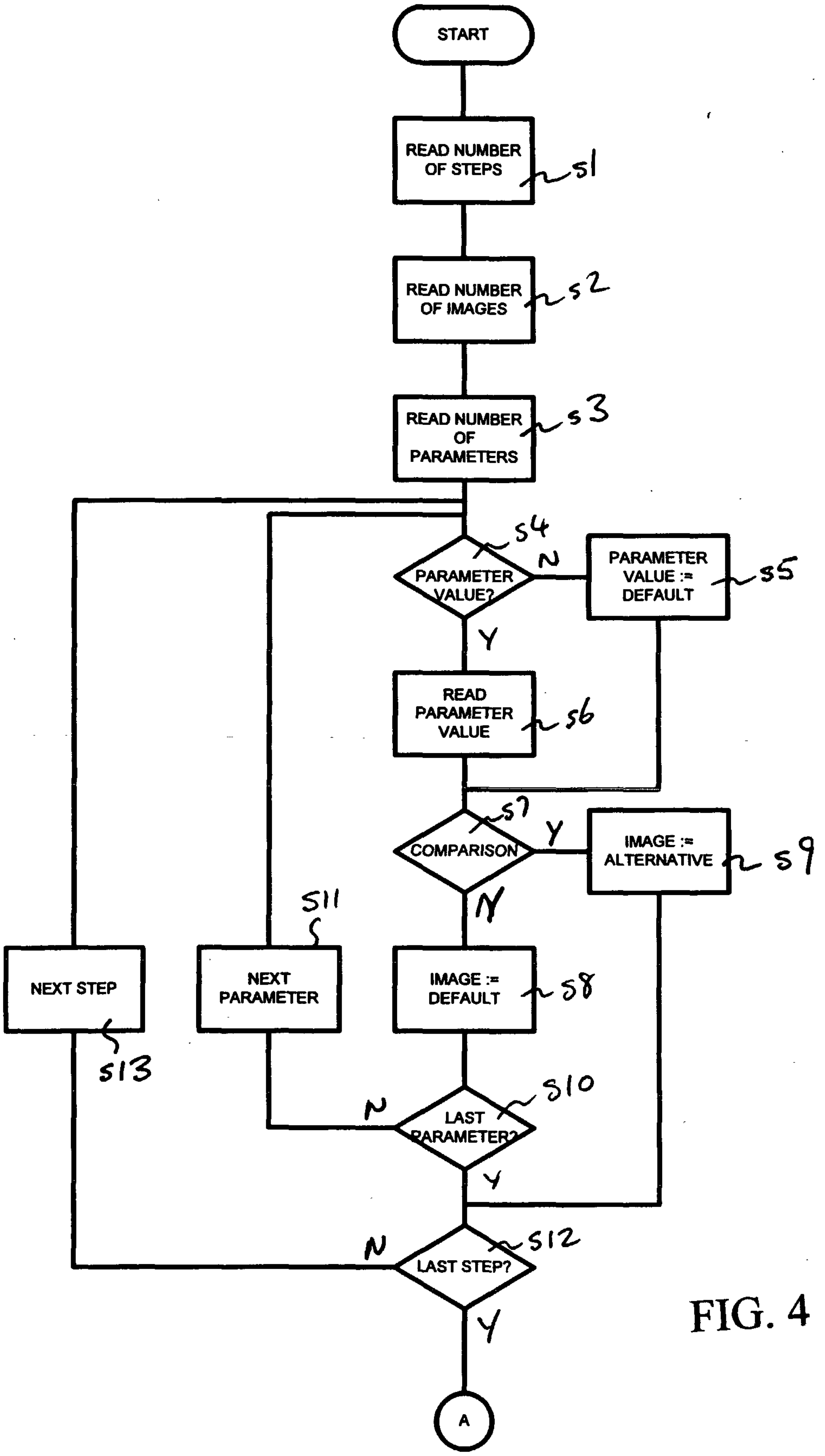
START
READ NUMBER OF STEPS
s1
READ NUMBER OF IMAGES
s2
READ NUMBER OF PARAMETERS
s3
PARAMETER VALUE?
s4
N
PARAMETER VALUE := DEFAULT
s5
Y
READ PARAMETER VALUE
s6
COMPARISON
s7
Y
IMAGE := ALTERNATIVE
s9
N
NEXT STEP
s13
NEXT PARAMETER
s11
IMAGE := DEFAULT
s8
LAST PARAMETER?
s10
N
Y
LAST STEP?
s12
N
Y
A

FIG. 4

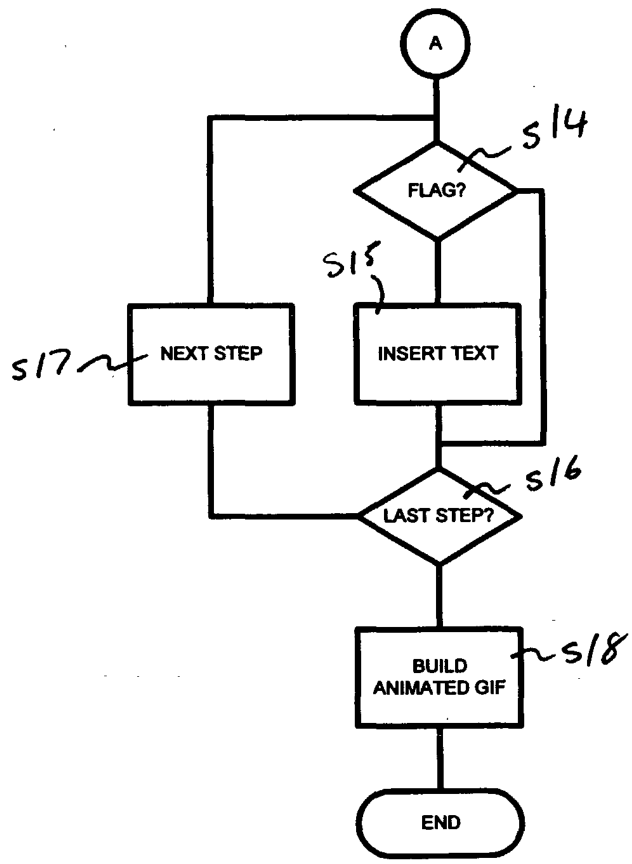


FIG. 4 continued

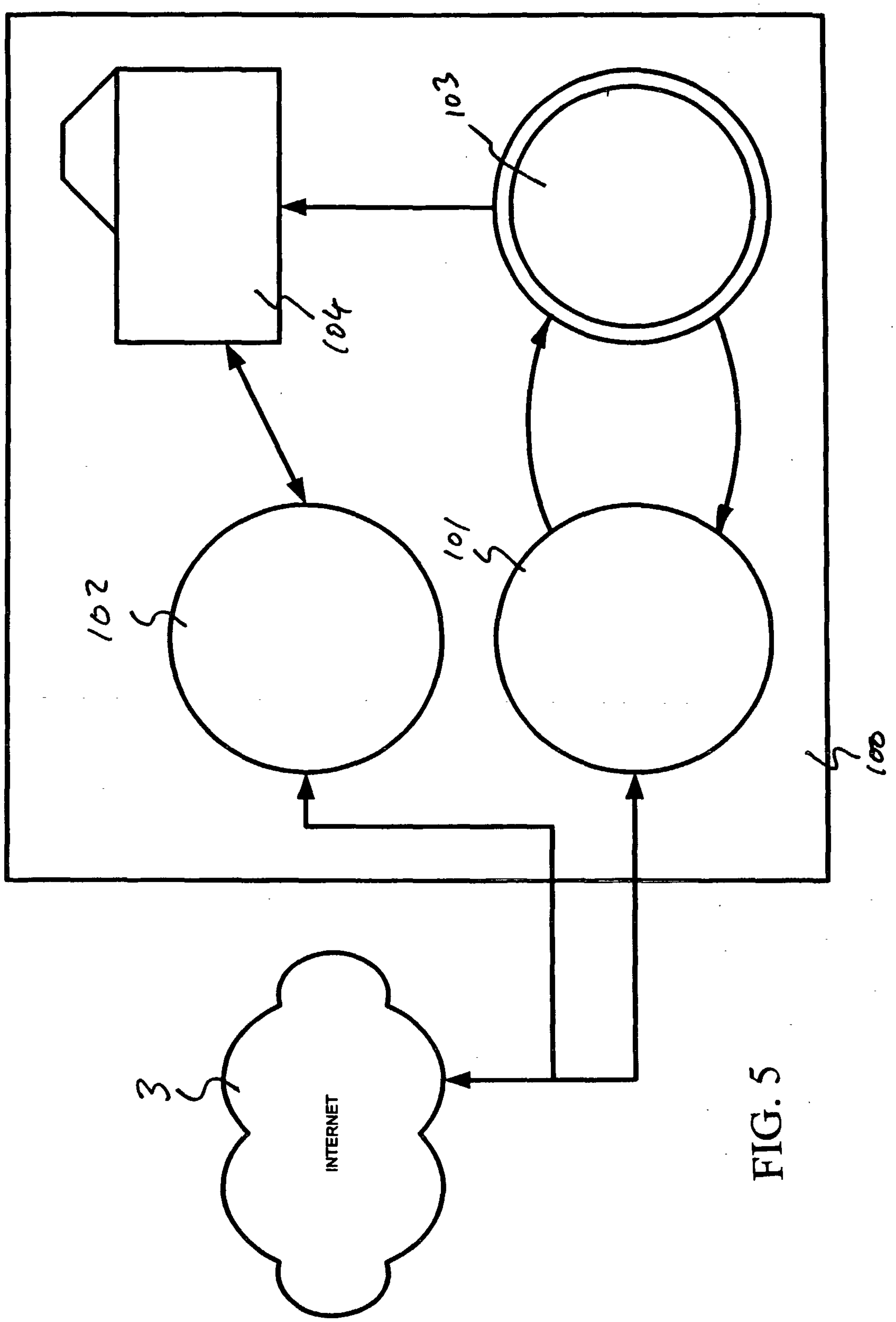


FIG. 5

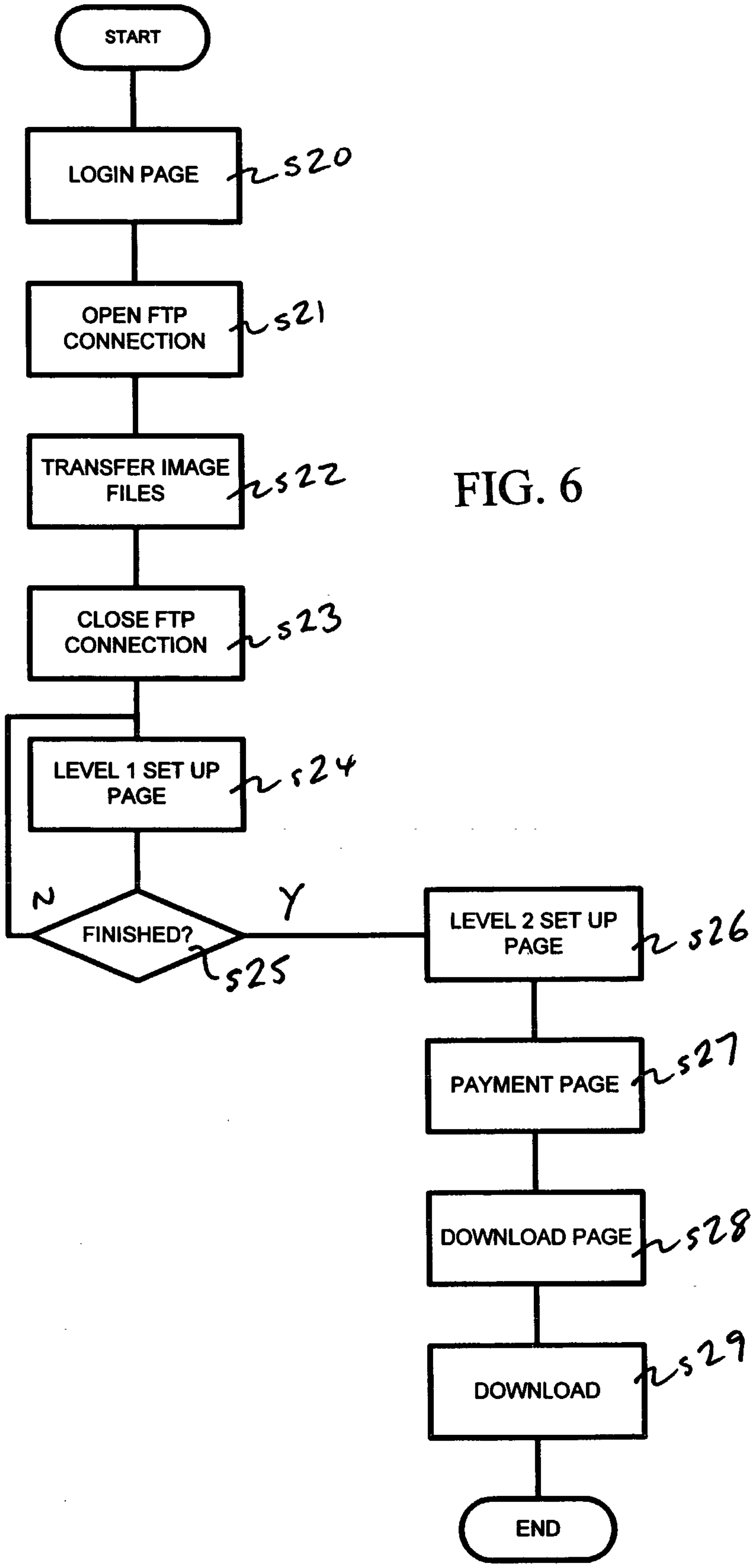
START
LOGIN PAGE
S20
OPEN FTP CONNECTION
S21
TRANSFER IMAGE FILES
S22
CLOSE FTP CONNECTION
S23
LEVEL 1 SET UP PAGE
S24
N
FINISHED?
S25
Y
LEVEL 2 SET UP PAGE
S26
PAYMENT PAGE
S27
DOWNLOAD PAGE
S28
DOWNLOAD
S29
END

FIG. 6

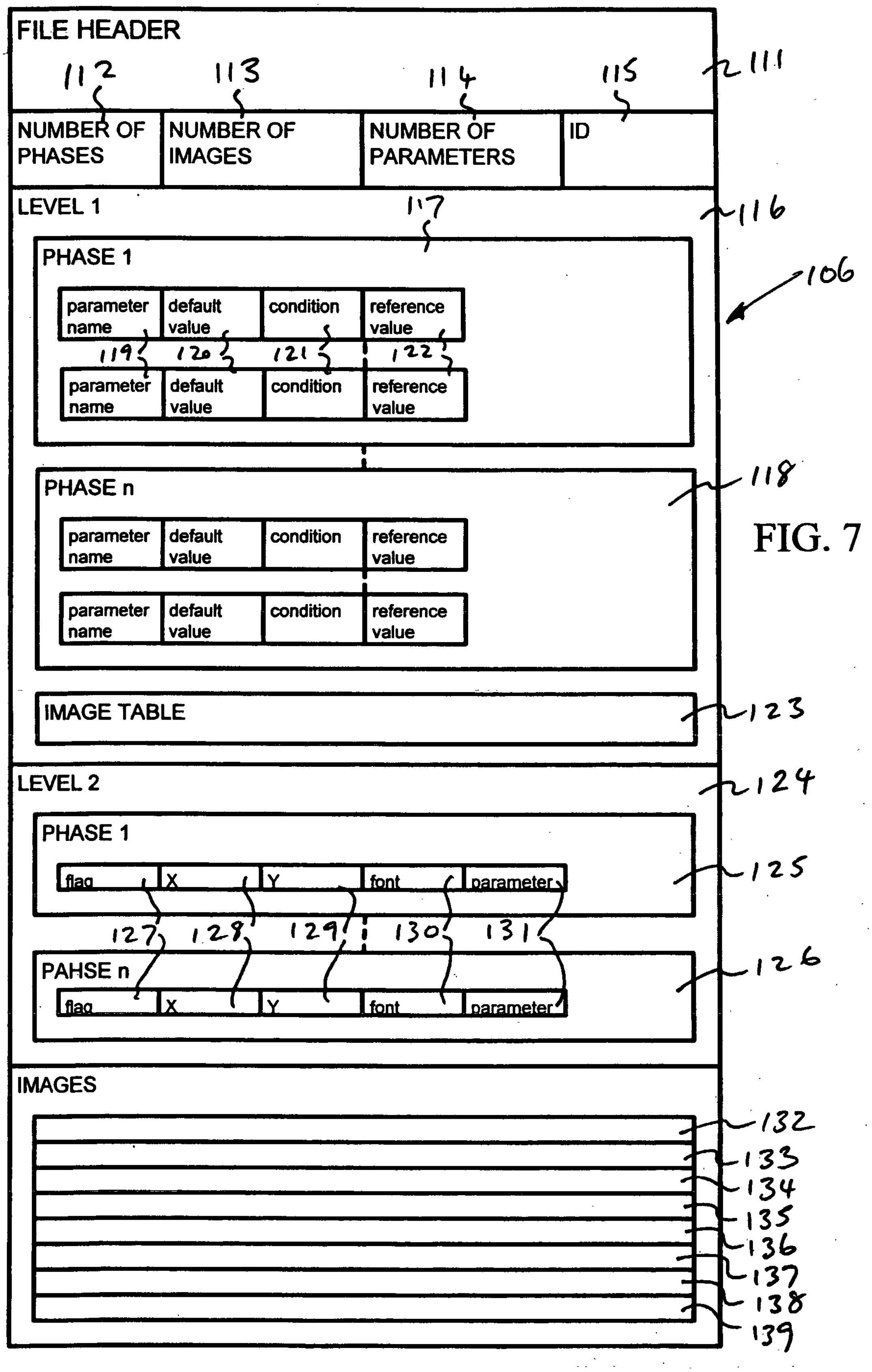
FILE HEADER
112
113
114
115
111
NUMBER OF PHASES
NUMBER OF IMAGES
NUMBER OF PARAMETERS
ID
LEVEL 1
117
116
PHASE 1
parameter name
default value
condition
reference value
119
120
121
122
106
PHASE n
118
IMAGE TABLE
123
LEVEL 2
124
PHASE 1
flag
X
Y
font
parameter
125
127
128
129
130
131
PAHSE n
126
IMAGES
132
133
134
135
136
137
138
139

FIG. 7

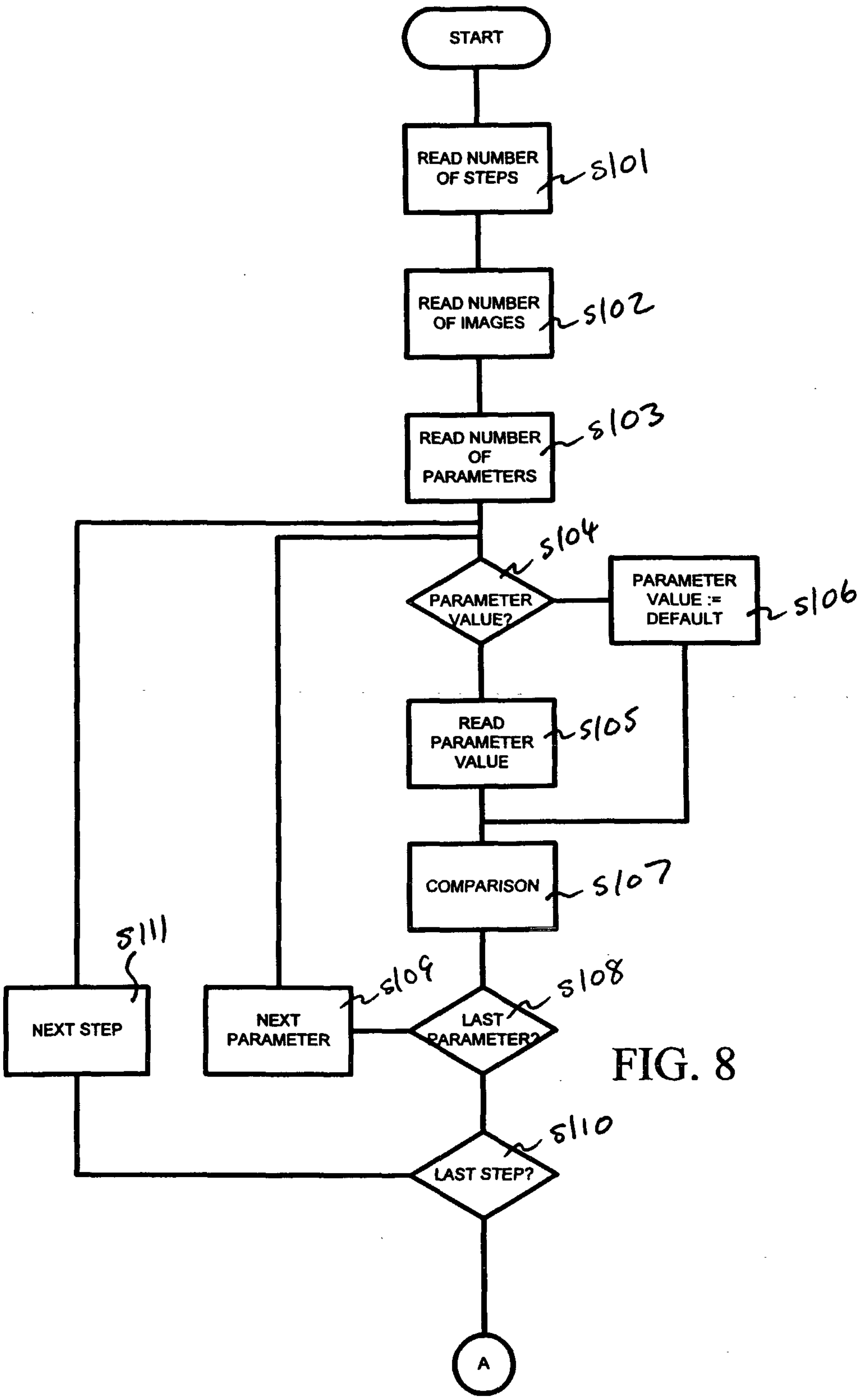
START
READ NUMBER OF STEPS
S101
READ NUMBER OF IMAGES
S102
READ NUMBER OF PARAMETERS
S103
PARAMETER VALUE?
S104
PARAMETER VALUE := DEFAULT
S106
READ PARAMETER VALUE
S105
COMPARISON
S107
LAST PARAMETER?
S108
NEXT PARAMETER
S109
NEXT STEP
S111
LAST STEP?
S110
A

FIG. 8

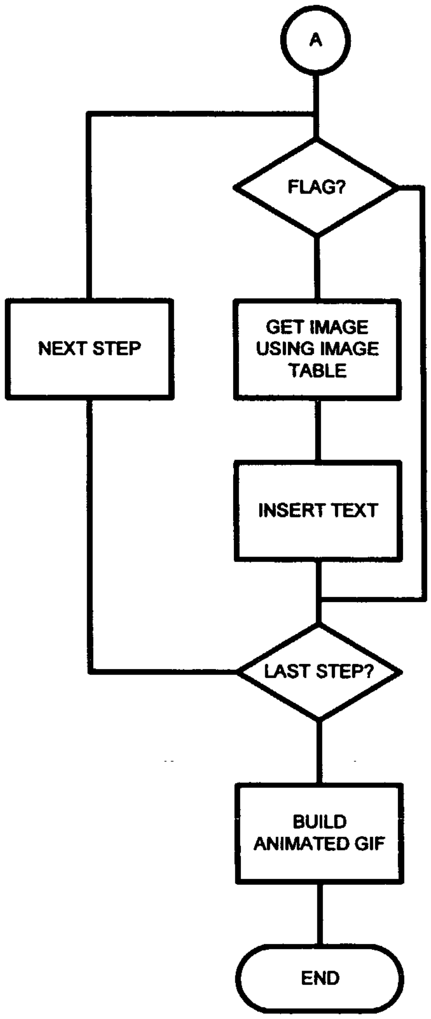


FIG. 8 continued

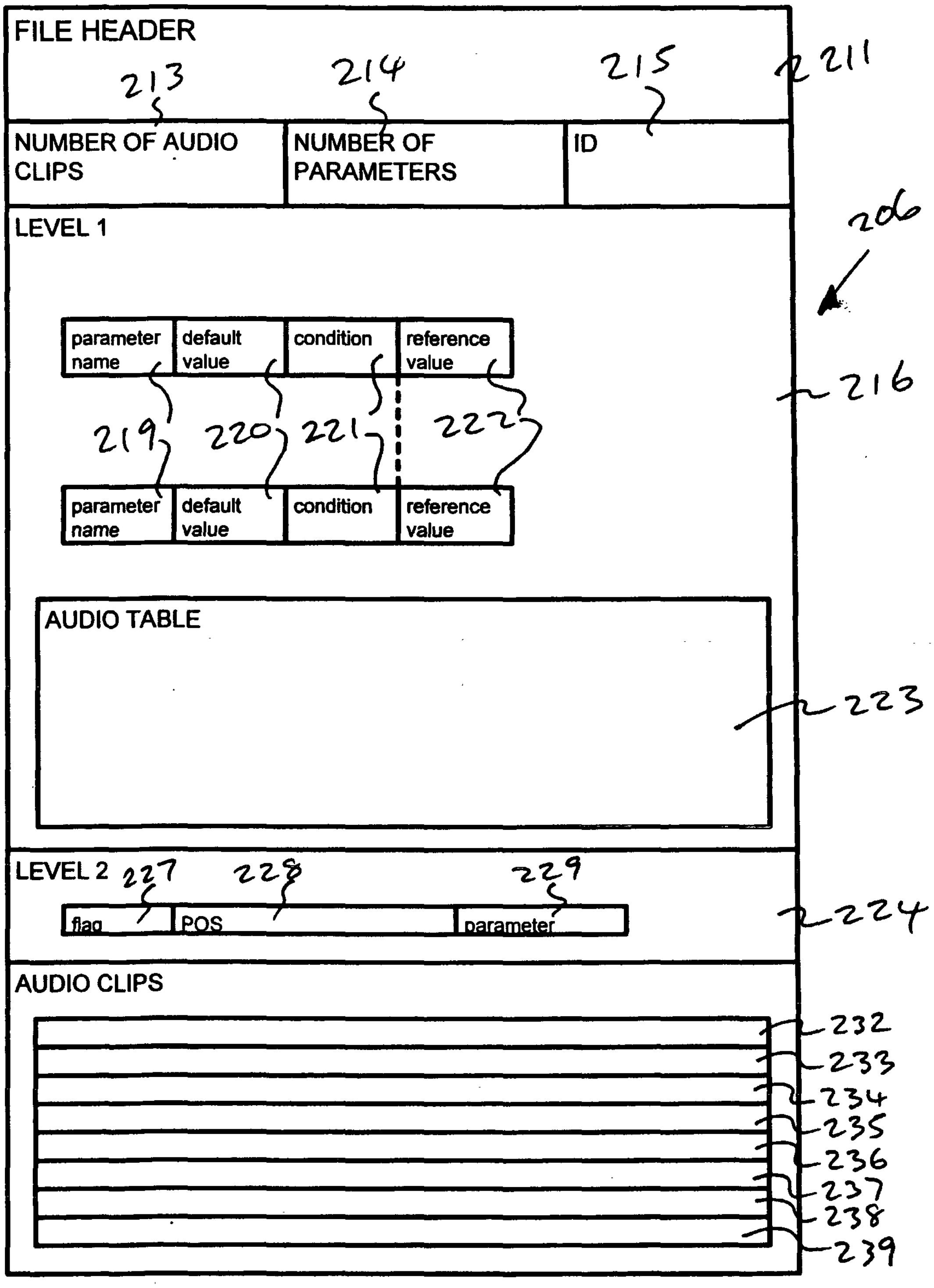
FILE HEADER
213
214
215
211
NUMBER OF AUDIO CLIPS
NUMBER OF PARAMETERS
ID
LEVEL 1
206
parameter name
default value
condition
reference value
216
219
220
221
222
parameter name
default value
condition
reference value
AUDIO TABLE
223
LEVEL 2
227
228
229
flag
POS
parameter
224
AUDIO CLIPS
232
233
234
235
236
237
238
239

FIG. 9

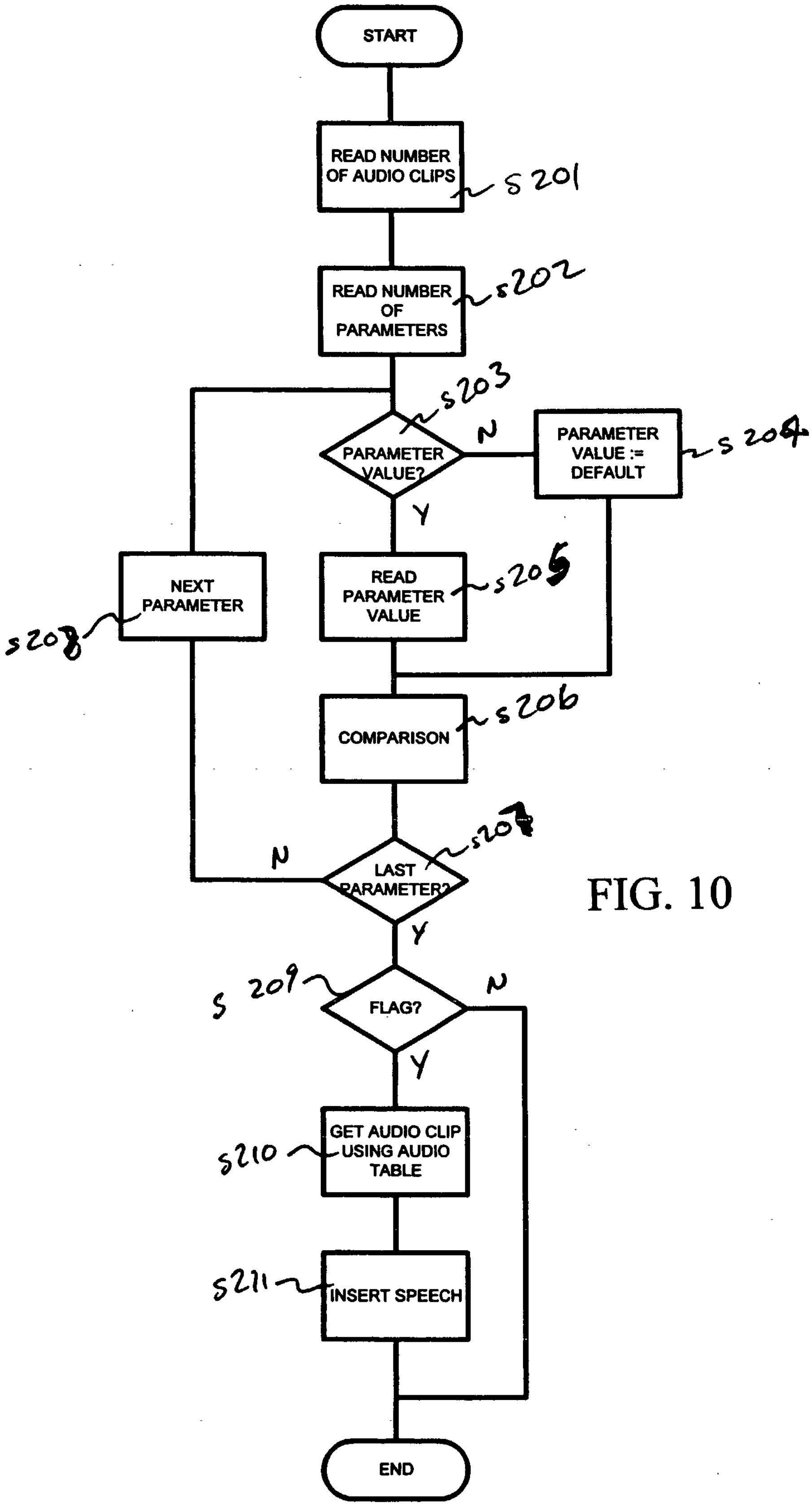
START
READ NUMBER OF AUDIO CLIPS
S201
READ NUMBER OF PARAMETERS
S202
S203
PARAMETER VALUE?
N
PARAMETER VALUE := DEFAULT
S204
Y
READ PARAMETER VALUE
S205
NEXT PARAMETER
S208
COMPARISON
S206
S207
LAST PARAMETER?
N
Y
S209
FLAG?
N
Y
GET AUDIO CLIP USING AUDIO TABLE
S210
INSERT SPEECH
S211
END

FIG. 10

European Patent Office

# EUROPEAN SEARCH REPORT

Application Number
EP 00 30 0007

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 16003 A (BELARC INC)<br>1 April 1999 (1999-04-01)<br>* page 3 *<br>----- | 1-17 | G06F17/30 |
| | | | TECHNICAL FIELDS SEARCHED (Int.Cl.7) |
| | | | G06F |

~~The present search report has been drawn up for all claims~~

| Place of search | Date of completion of the search | Examiner |
|---|---|---|
| BERLIN | 21 July 2000 | Triest, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

European Patent Office

Application Number

EP 00 30 0007

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-17

European Patent Office

## LACK OF UNITY OF INVENTION SHEET B

Application Number

EP 00 30 0007

The Search Division considers that the present European patent application does not comply with the requirements of unity of invention and relates to several inventions or groups of inventions, namely:

1. Claims: 1-17

   method and technical manifestation for sending a content entity comprising multiple source data elements and control data to the client

2. Claims: 18-22

   method for generating a program module containing multiple source data elements and operation data according to user input

## ANNEX TO THE EUROPEAN SEARCH REPORT ON EUROPEAN PATENT APPLICATION NO. EP 00 30 0007

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2000

| Patent document cited in search report | Publication date | Patent family member(s) | Publication date |
|---|---|---|---|
| WO 9916003 A | 01-04-1999 | US 6085229 A | 04-07-2000 |
| | | AU 9494198 A | 12-04-1999 |

EPO FORM P0459

For more details about this annex : see Official Journal of the European Patent Office, No. 12/82